(19) **Europäisches Patentamt**

**European Patent Office**

**Office européen des brevets**

(11) **EP 0 974 962 B1**

(12) **EUROPÄISCHE PATENTSCHRIFT**

(45) Veröffentlichungstag und Bekanntmachung des Hinweises auf die Patenterteilung:
**08.09.2004  Patentblatt 2004/37**

(51) Int Cl.⁷: **G11B 11/10**

(21) Anmeldenummer: **99201947.1**

(22) Anmeldetag: **18.06.1999**

(54) **Magneto-optisches Speichermedium mit Doppelmaskierung**

Magneto-optical storage medium with double masking

Support de mémoire magnéto-optique avec double masquage

(84) Benannte Vertragsstaaten:
**DE FR GB**

(30) Priorität: **27.06.1998  DE 19828757**
             **10.07.1998  DE 19830936**

(43) Veröffentlichungstag der Anmeldung:
**26.01.2000  Patentblatt 2000/04**

(73) Patentinhaber:
• **Philips Intellectual Property & Standards GmbH**
  **20099 Hamburg (DE)**
  Benannte Vertragsstaaten:
  **DE**
• **Koninklijke Philips Electronics N.V.**
  **5621 BA Eindhoven (NL)**
  Benannte Vertragsstaaten:
  **FR GB**

(72) Erfinder: **Becker, Stephan, Dr.**
  **22335 Hamburg (DE)**

(74) Vertreter: **Volmer, Georg, Dipl.-Ing.**
  **Philips Intellectual Property & Standards GmbH,**
  **Postfach 50 04 42**
  **52088 Aachen (DE)**

(56) Entgegenhaltungen:
**EP-A- 0 586 175**      **EP-A- 0 652 556**
**EP-A- 0 686 970**      **EP-A- 0 833 317**
**WO-A-98/02878**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein magneto-optisches Speichermedium zum mehrfachen Schreiben und Lesen von Informationen hoher Dichte, das ein Substrat, eine erste magnetische Schicht zum Auslesen von Informationen, eine zweite magnetische Zwischenschicht und eine dritte magnetische Schicht zum Speichern von Informationen umfaßt, wobei die Curie-Temperatur der zweiten Schicht niedriger ist als die Curie-Temperatur der ersten und dritten Schicht.

Magneto-optische Speichermedien bieten die Möglichkeit, große Datenmengen kostengünstig zu lagern und zu transportieren. Sie vereinen in sich die hohe Bit-Dichte und Datensicherheit der optischen Datenaufzeichnung mit der Dauerhaftigkeit (permanence) und leichten Löschbarkeit (ease of erasability) der magnetischen Speicherung. Wie bei konventionellen magnetischen Speichermedien wird die Information als Sequenz von unterschiedlich magnetisierten Bereichen, d.h. als magnetisches Domänenmuster, gespeichert. Magneto-optische Speichermedien zeichnen sich durch ihre extrem sichere, schnelle und nahezu unbegrenzte Überschreibbarkeit aus.

Ein magneto-optisches Speichermedium läßt sich mit Information beschreiben, indem die Wirkung eines Magnetfeldes und die Heizwirkung eines Lasers miteinander kombiniert werden. Das Laserlicht erwärmt das Speichermedium in einem lokalen Bereich, während das Magnetfeld diesen Bereich ausrichtet. Dabei hängt die Richtung der Magnetisierung von der Richtung des eingesetzten Magnetfeldes ab. Das Auslesen geschieht mit dem gleichen Laser, der jedoch mit geringerer Intensität betrieben wird. Die Polarisationsrichtung des reflektierten oder transmittierten Lichts hängt von der Magnetisierung der betreffenden Stelle ab. Diese Polarisationsänderung läßt sich messen und liefert somit die gespeicherte Information zurück. Physikalisch wird diese Wechselwirkung zwischen magnetischen Materialien und polarisiertem Laserlicht als Kerr- (Reflexion) bzw. Faraday - Effekt (Transmission) bezeichnet.

Magneto-optische Speichermedien sollen eine hohe Datendichte, eine hohe Schreibempfindlichkeit und eine hohe Auslesegenauigkeit aufweisen. Die maximal erreichbare Datendichte magneto-optischer Medien ist einerseits durch das Minimum der magnetischen Domänengröße und andererseits durch das optische Auflösungsvermögen der Laser-Optik begrenzt. Da die Mindestgröße der magnetischen Domänen wesentlich kleiner ist als das optische Auflösungsvermögen der üblichen Laser-Optik, die der Wellenlänge des verwendeten Lasers proportional ist, ist die Speicherdichte letztlich nur durch das Auflösungsvermögen der Laser-Optik begrenzt.

Für magneto-optische Speichermedien ist es jedoch - anders als für optische Phase-Change-Speichermedien - möglich, durch Verwendung magnetischer Vielschichtsysteme unter Ausnutzung des vom Laserstrahl erzeugten Temperaturgradienten auf dem Medium eine magnetische Superauflösung (Magnetic Super Resolution) zu erreichen. Ein solches MSR-Verfahren ermöglicht es, Daten mit höherer Datendichte auszulesen, als der, die dem Auflösungsvermögen der Laser-Optik entspricht, weil dabei alle Bits außer dem gerade bearbeiteten unter einer magnetischen Maske liegen. Dadurch können Daten mit einer höheren Datendichte gelesen werden, als es der Auflösung der Laseroptik entspricht. Nichtsdestoweniger bemüht man sich, die Datendichte noch zu erhöhen und den apparativen Aufwand für die Laufwerke zu erniedrigen.

Beispielsweise ist aus der EP 0 686 970 ein magneto-optisches Speichermedium bekannt, das ein Substrat, eine erste magnetische Schicht, laminiert auf dem Substrat zur Reproduktion von Information, eine zweite magnetische Schicht, laminiert auf der ersten magnetischen Schicht zur Speicherung der Information und eine dritte magnetische Schicht, angeordnet zwischen der ersten und zweiten magnetischen Schicht, mit einer Curie-Temperatur, die niedriger ist, als die Curie-Temperatur der ersten und zweiten magnetischen Schicht, umfaßt, wobei eine Richtung der Magnetisierung eines Bereiches in der ersten magnetischen Schicht, die zu einem Bereich in der dritten magnetischen Schicht benachbart ist, bei einer Temperatur, die gleich oder höher als die Curie-Temperatur der dritten Schicht ist, in Richtung der Magnetisierung in der Umgebung des Bereiches in der ersten magnetischen Schicht orientiert ist.

Es ist eine Aufgabe der vorliegenden Erfindung, ein magneto-optisches Speichermedium zur Verfügung zu stellen, das eine scharfe Signalauflösung bei hoher Datendichte ermöglicht.

Erfindungsgemäß wird die Aufgabe gelöst durch ein magneto-optisches Speichermedium gemäß Ansprüch 1.

Das erfindungsgemäße magneto-optische Speichermedium zeichnet sich aufgrund eines verbesserten magneto-optischen Effektes durch ein hohes Signal/Rausch-Verhältnis aus. Die magnetischen Eigenschaften der Ausleseschicht verändern sich drastisch im Lesefleck und ergeben scharfe und gut definierte Übergänge zwischen den verschiedenen magnetischen Konfigurationen während des Ausleseverfahrens mittels magnetischer Superauflösung.

Eine weitere Ausführungsform der Erfindung ist das magneto-optische Speichermedium gemäß Anspruch 2.

Ein magneto-optischen Speichermedium gemäß dieser Ausführungsform der Erfindung kann nach einem LIMDOW (Laser Intensity Modulation Direct Overwrite) - Verfahren beschrieben werden, bei dem die Intensität des Laserstrahls die endgültige Magnetisierungsrichtung bestimmt. Dabei werden neue Daten direkt über die alten Daten in einem Durchgang geschrieben, ohne daß es notwendig ist, in einem separaten Schreibzyklus zuerst die alten Daten zu löschen. Dadurch verkürzt sich der Schreibzyklus. Das magneto-optische Laufwerk kann für beide Ausführungsformen einfach aufgebaut sein, weil nur ein externes Magnetfeld für den Schreib- und Lesezyklus notwendig ist.

Nachfolgend wird die Erfindung anhand von vier Zeichnungen und zwei Ausführungsbeispielen weiter erläutert:

Fig. 1 zeigt die Konfiguration eines magneto-optischen Speichermediums gemäß Ausführungsbeispiel 2 beim Auslesen eines "log. 1" Signals,

Fig. 2 beim Auslesen eines "log. 0" Signals.

Fig. 3 zeigt die Konfiguration eines magneto-optischen Speichermediums gemäß Ausführungsbeispiel 2 beim Schreiben eines "log.1" Signals,

Fig.4 beim Schreiben eines "log. 0" Signals.

Das magneto-optische Speichermedium gemäß der Erfindung umfaßt nach einer ersten Ausführungsform ein Substrat und drei übereinander angeordnete magnetische Schichten. Es kann eine oder mehrere weitere nichtmagnetische Schichten umfassen, die als Korrosionsschutz, zur Reflexion des eingestrahlten Lichtes oder zur Temperaturableitung dienen.

Die erste magnetische Schicht wird nachfolgend als Ausleseschicht (read out layer) 1, die zweite magnetische Schicht als Zwischenschicht (intermediate layer) 2, die dritte magnetische Schicht als Speicherschicht (memory layer) 3 bezeichnet.

Die Ausleseschicht liegt dem Laser-Lesekopf zugewandt auf dem transparenten Substrat. Im Moment des Auslesens, d.h. im Zentralbereich des Leseflecks mit der Temperatur $T_m$ und im Einflußbereich des Laufwerkmagneten mit dem Magnetfeld $H_e$, trägt sie die auszulesende Information aus der Speicherschicht in einem kleinen Teilbereich des Bereiches, der vom Laserstrahl abgedeckt wird. Außerhalb dieses kleinen Teilbereiches, aber noch innerhalb des Einflußbereiches des Laufwerksmagneten, ist die Ausleseschicht einheitlich in Richtung des äußeren Magnetfeldes magnetisiert und erzeugt dort ein permanentes, zeitlich konstantes Signal. Sie trägt daher keine Signalinformation. Außerhalb des Einflußbereiches des Laufwerkmagneten enthält sie die gleiche Signalinformation wie die Speicherschicht.

Die Zwischenschicht übermittelt im Moment des Auslesens, d.h. im Zentralbereich des Leseflecks und im Einflußbereich des Laufwerkmagneten die Signalinformation aus der Speicherschicht in die Ausleseschicht. Im Frontund Rückbereich des Leseflecks schneidet sie die magnetische Kopplung zwischen der Speicherschicht und der Ausleseschicht ab.

Die Speicherschicht ist die Schicht, welche die Signalinformation gespeichert hält. Beim Auslesevorgang bewahrt sie die gespeicherte Information, während die anderen Schichten ihr Magnetisierungsverhalten abhängig von Temperatur und äußerem Feld verändern.

Nach einer anderen, zweiten, Ausführungsform umfaßt das erfindungsgemäße magneto-optische Speichermedium ein Substrat und vier übereinander angeordnete magnetische Schichten. Neben der Ausleseschicht, der Zwischenschicht und der Speicherschicht umfaßt das Speichermedium in dieser Ausführungsform zusätzlich eine Referenzschicht (reference layer) 4.

Die Referenzschicht hat ihre Funktion beim Schreiben mittels des LIMDOW-Verfahrens. Sie hat sowohl einen sehr hohen Kompensationspunkt als auch einen sehr hohen Curie-Punkt. Beim Schreiben mittels LIMDOW-Verfahren wird ihr bei hohen Temperaturen, in den die anderen drei Schichten neutralisiert sind, die gewünschte Magnetisierung aufgeprägt, die sie bei tieferen Temperaturen unabhängig vom äußeren Feld weitergibt.

Die magnetischen Schichten bestehen aus magneto-optischen Materialien, die eine uniaxiale Anisotropie $K_u$ mit einer magnetischen Vorzugsrichtung senkrecht zur Schichtoberfläche sowie eine temperaturabhängige Koerzitivfeldstärke $H_C$ und Sättigungsmagnetisierung (saturation magnetization) $M_s$ haben und in magnetische Domänen aufteilbar sind. Die Schichten sind miteinander magnetisch austauschgekoppelt.

Bevorzugte magneto-optische Materialien sind amorphe Legierungen aus Seltenerdmetallen (RE: Gd, Tb, Dy) und Übergangsmetallen (TM: Fe, Co), beispielsweise GdCo, GdFe, TbFe, GdTbFe oder GdTbFeCo. Zur zusätzlichen Einstellung der Curie-Temperatur kann zu der RE/TM-Legierung zusätzlich Si hinzulegiert werden. Diese RE/TM-Legierungen sind ferrimagnetisch. Ihr magnetisches Verhalten läßt sich als vektorielle Addition der magnetischen Momente der RE- und der TM-Komponente beschreiben, die antiparallel zueinander gekoppelt sind. Die Nettomagnetisierung der Legierung ergibt sich aus der Summe von RE- und TM-Komponente.

Die Abnahme der magnetischen Momente von RE- und TM- Anteil mit der Temperatur ist unterschiedlich, weswegen sich durch Temperaturänderung die Nettomagnetisierung in ihrem Vorzeichen verändern kann. Bei niedrigeren Temperaturen dominiert die Magnetisierung der RE-Komponente, bei höheren Temperaturen die der TM-Komponente. Es existiert eine charakteristische Temperatur, die sogenannte Kompensationstemperatur $T_{cp}$, bei der die Nettomagnetisierung Null beträgt, weil dort gilt $M_{RE} = -M_{TM}$. Oberhalb der Kompensationstemperatur wechselt das Vorzeichen der Nettomagnetisierung, bis bei der Curie-Temperatur $T_C$ aufgrund der thermischen Bewegung die Orientierung der magnetischen Momente beider Komponenten verschwindet und die Nettomagnetisierung wieder auf Null sinkt. Bei der Kompensationstemperatur geht die Koerzitivfeldstärke $H_C$ gegen unendlich, weil ein angelegtes äußeres Feld mit keiner nach außen wirksamen Magnetisierung in Wechselwirkung treten kann. Andererseits reicht knapp unterhalb der Curie-Temperatur bereits ein schwaches Magnetfeld aus, um die Magnetisierung umzukehren. Daher weisen ferrimagnetische RE/TM-Legierungen eine hohe Koerzitivfeldstärke nahe der Kompensationstemperatur und eine geringe Koerzitivfeldstärke nahe der Curie-Temperatur auf. Ein magneto-optisches Signal wird auch am Kompensationspunkt erzeugt, weil der Kerr- bzw. der Faraday-Effekt nicht von der Nettomagnetisierung des Materials, sondern bei den typischerweise verwendeten Laserwellenlängen ausschließlich von der TM-Komponente erzeugt wird.

In den erfindungsgemäßen Schichten besteht jedoch nicht nur eine Kopplung zwischen RE- und TM-Komponenten in einer Schicht, sondern es existiert auch zwischen zwei Schichten eine Kopplung zwischen den RE-Komponenten einerseits und den TM-Komponenten andererseits. Diese Kopplung zwischen den Schichten wird als magnetische Austauschkopplung bezeichnet.

Wenn bei einer bestimmten Temperatur beide Schichten magnetisch von der gleichen Komponente dominiert werden, liegen sowohl die Momente beider Komponenten als auch beide Nettomagnetisierungen Ms im energetisch günstigsten Grundzustand parallel. Diese Schichten werden als parallel gekoppelt" bezeichnet. Ist bei einer bestimmten Temperatur die eine Schicht magnetisch von der RE- und die andere von der TM-Komponente dominiert, dann liegen im Grundzustand die magnetischen Momente beider Komponenten parallel, die Nettomagnetisierungen Ms beider Schichten liegen jedoch antiparallel zueinander, weswegen diese Schichten als antiparallel gekoppelt" bezeichnet werden. Wird bei antiparallel gekoppelten Schichten eine parallele Nettomagnetisierung beider Schichten zueinander erzwungen, dann sind die magnetischen Momente beider Komponenten entgegengesetzt zueinander ausgerichtet. Dadurch entsteht zwischen den Schichten trotz der parallelen Nettomagnetisierung eine horizontale Interfacewand, in der sich die RE- und TM-Momente um 180° drehen (horizontale Bloch-Wand). Diese Interfacewand enthält einen zusätzlichen Energiebeitrag, der als Kopplungsenergie oder Interfacewandenergie $\sigma_w$ bezeichnet wird mit $H_w = \sigma_w / 2 M_s t$, wobei $H_w$, M und t die einer der Wandenergie entsprechenden Feldstärke, die Sättigungsmagnetisierung und die Schichtdicke sind.

In der Nähe des Kompensationspunktes einer RE/TM-Schicht ist diese Schicht durch ein äußeres Magnetfeld praktisch nicht beeinflußbar. Existiert jedoch zwischen dieser und einer zweiten RE/TM Schicht eine horizontale Interfacewand, dann kann eine der Schichten auch in der Nähe ihres Kompensationspunktes und auch gegen ein äußeres Feld ummagnetisiert werden, wenn der Energiebetrag, der beim Ummagnetisieren durch das Auflösen der Interfacewand frei wird, hinreichend groß ist.

Die magnetischen Schichten des erfindungsgemäßen magneto-optischen Speichermediums lassen sich durch ein Hochfrequenz-Kathodenzerstäubungsverfahren (HF-sputtering) mit RE/TM-Targets auf das Substrat aufbringen. Durch Variation der relativen Mengen von RE- zu TM-Anteil in der Schicht wird die Kompensationstemperatur und die Curie-Temperatur der Schicht eingestellt. Die Kopplungsenergien lassen sich durch die Schichtzusammensetzung, durch den Partialdruck des Schutzgases, durch Anlegen eines Magnetfeldes während der Schichtherstellung, sowie durch eine Variation der Kenngrößen des Plasmaprozesses beeinflussen.

Die Schichten können auch durch schnelles Abkühlen aus einer Schmelze oder durch simultanes Verdampfen der elementaren Bestandteile hergestellt werden.

Das Substrat kann aus einem lichtdurchlässigen, dielektrischen Material, wie Glas, Acrylglas oder Kunststoffen wie Polycarbonat oder ähnlichem bestehen. Zur Verbesserung der optischen Eigenschaften und zur Verhinderung von Korrosion kann das magneto-optische Speichermedium zusätzliche Schichten aus einem dielektrischen Material, beispielsweise aus $Si_3N_4$, AlN, $SiO_2$, $SiO_x$, ZnS oder $MgF_2$ umfassen. Weiterhin kann das Speichermedium noch mit einer Spiegelschicht zur Reflexion des Laserlichtes und zur Ableitung der Wärme versehen werden.

Ausführungsbeispiel 1

Ein magneto-optisches Speichermedium gemäß einer ersten Ausführungsform umfaßt ein dem Laser zugewandtes transparentes Substrat und darauf angeordnet drei magnetische Schichten, eine Ausleseschicht 1, eine Zwischenschicht 2 und eine Speicherschicht 3.

Für die Kompensations- und Curie-Temperaturen der drei magnetischen Schichten gilt:

$$T_a < T_f < T_m \leq T_{cp1} \leq T_{cp2} < T_{C2} < T_r < T_{C1} < T_{cp3} < T_{C3} \leq T_w$$

und

$$H_{C1}(T) < H_e \text{ für } T_a < T < T_m$$

$$H_{C2}(T) < H_e \text{ für } T_a < T < T_m$$

$$H_{C3}(T) > H_e \text{ für } T < T_w$$

Dieses magneto-optische Speichermedium kann nach einem üblichen Schreibverfahren für magneto-optische Speichermedien beschrieben werden. Beispielsweise kann man so verfahren, daß der Laser einen Bereich, eine Domäne, des Speichermediums auf $T_w$ erhitzt. Da die Koerzitivität aller Schichten in der Nähe ihrer Curie-Temperatur abnimmt, läßt sich der erhitzte Bereich mit einem kleinen Magnetfeld ummagnetisieren. In einem ersten Schreibumlauf wird die vorhandene Information durch einheitliches Magnetisieren in eine Richtung senkrecht zur Schichtebene gelöscht. In einem zweiten Schreibumlauf werden lokale Bereiche des Speichermediums per Laserpuls erhitzt und in eine Richtung ummagnetisiert, die antiparallel zur ersten Magnetisisierungsrichtung ist. Das Speichermedium enthält dann die Information in binärer Form.

Die auf dem erfindungsgemäßen magneto-optischen Speichermedium gespeicherten Informationen werden mittels eines MSR-Leseverfahrens ausgelesen, wobei durch moderates Heizen mittels Laser - während des Lesens - eine Front- und eine Rückmaskierung mit einem Fenster im Zentrum des Leseflecks in einem mittleren Temperaturbereich erzeugt wird. Im Bereich der Front- und der Rückmaskierung ist die Ausleseschicht jeweils einheitlich parallel zum äußeren Feld ausgerichtet. Für den Auslesemechanismus wird dasselbe Magnetfeld $H_e$ wie für den Schreibmechanismus verwendet. Bei dem MSR-Leseverfahren wird die vom Laserstrahl auf bzw. in dem Speichermedium erzeugte Temperaturverteilung ausgenutzt, die sich durch die Relativbewegung des Lesekopfs zum Speichermedium und durch die Wärmeleitfähigkeit des Mediums ergibt. Durch das Zusammenwirken beider Mechanismen ergibt sich für den Lesefleck eine ellipsoide Temperaturverteilung mit einem gegenüber dem Lesefleck dezentralen Temperaturmaximum an der gegenüber der Laufrichtung rückwärtigen Seite des Leseflecks. Der Lesefleck hat am vorderen Ende (Front) eine niedrige Temperatur $T_f$, im mittleren Bereich eine mittlere Temperatur $T_m$ und im rückwärtigen Bereich eine Temperatur $T_r$.

Beim Lesen eines Signals "log. 0" (weiß), bei dem die Richtung der Magnetisierung aller Schichten parallel zum äußeren Feld steht, verändert sich der Magnetisierungszustand aller drei magnetischen Schichten nicht, wenn die mit "log. 0" beschriebene Domäne bei Raumtemperatur in den Wirkungsbereich des äußeren Magnetfeldes $H_e$ tritt und durch den Laserstrahl im Lesebereich zunächst auf $T_f$ und dann auf $T_m$ erwärmt wird. Dieser Zustand bildet die Frontmaskierung.

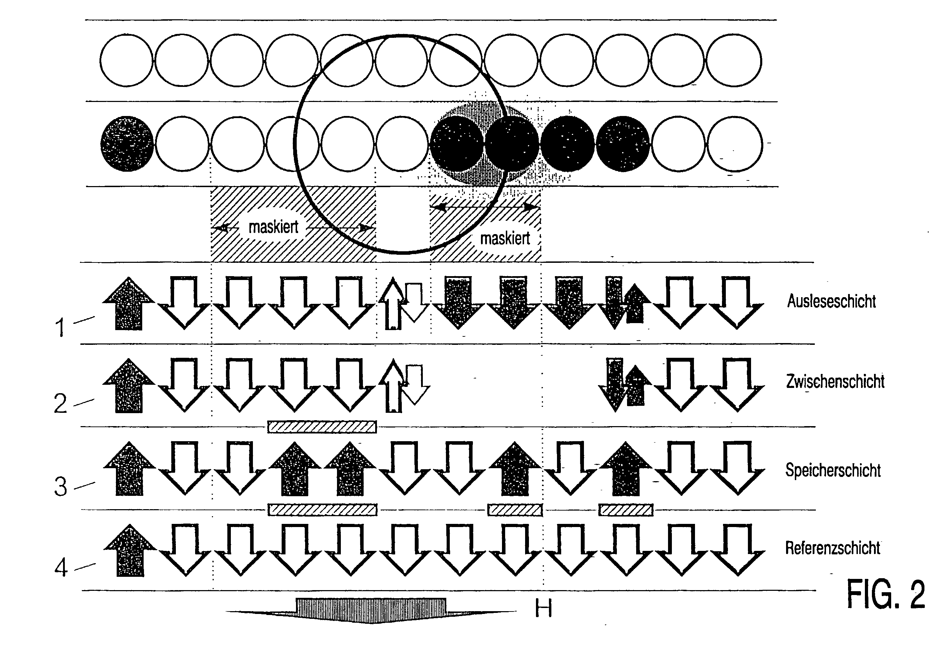

Bei der Temperatur $T_m$ wird der Kompensationspunkt der Schichten 1 und 2 erreicht, siehe Fig. 2. Infolgedessen gehen die Nettomagnetisierung der Schichten 1 und 2 zunächst auf Null zurück und wechseln beim weiteren Erwärmen das Vorzeichen. Obwohl die Nettomagnetisierungen $M_s$ der Schichten 2 und 3 nun antiparallel zueinander stehen, bildet sich zwischen ihnen keine horizontale Interfacewand aus, weil die Magnetisierung der RE- bzw. der TM-Komponenten parallel zueinander ausgerichtet bleiben. Dadurch behält die Ausleseschicht weiterhin die Information "log. 0".

Im heißen Bereich des Leseflecks wird die Curie-Temperatur der Schicht 2 überschritten und ihre resultierende Nettomagnetisierung ist Null. Sie beeinflußt weiterhin die Magnetisierung ihrer Nachbarschichten nicht. Infolge der nun fehlenden Kopplung zum restlichen Schichtsystem unterliegt Schicht 1 nur noch der Wirkung des äußeren Feldes, weswegen sie in dessen Richtung ummagnetisiert wird und so die Rückmaskierung bildet.

Wenn diese Domäne aus dem heißen Bereich des Leseflecks heraus wandert, und die Curie-Temperatur der Schicht 2 wieder unterschritten wird, wird ihre Nettomagnetisierung $M_s$ parallel zum äußeren Feld ausgerichtet, da ihre Koerzitivfeldstärke in der Nähe ihrer Curie-Temperatur klein ist. Die Magnetisierung der RE- und TM-Komponenten der Schicht 2 ist jetzt antiparallel zu denen der Schicht 3 ausgerichtet. Trotz der parallel orientierten Nettomagnetisierung hat sich jetzt eine horizontale Interfacewand zwischen Schicht 2 und 3 gebildet. Wenn der Kompensationspunkt der Schichten 1 und 2 erreicht wird, hat das äußere Feld keinen Einfluß mehr auf deren Magnetisierungszustand. Da aber eine horizontale Interfacewand zwischen Schicht 2 und 3 besteht und durch deren Auflösung genügend Energie zum Ummagnetisieren von Schicht 1 und 2 existiert, werden die beiden Schichten ummagnetisiert. Damit ist unterhalb der Kompensationstemperatur von Schicht 1 und 2 wieder der Ausgangszustand erreicht, bei dem alle Schichten eine Orientierung parallel zum äußeren Feld besitzen.

Beim Lesen des Signals " log. 1"(schwarz), bei der die Magnetisierung aller Schichten zunächst antiparallel zum externen Feld ausgerichtet ist, richtet sich die Magnetisierungsrichtung der Schicht 1 und 2 parallel zum äußeren Feld aus, sobald die auszulesende Domäne in den Wirkungsbereich des äußeren Magnetfeldes $H_e$ eintritt. Die Schicht 3, die eigentliche Speicherschicht, bewahrt ihre Magnetisierung, da sie bei Raumtemperatur eine sehr hohe Koerzitivkraft hat. Dadurch bildet sich eine horizontale Interfacewand zu der benachbarten Schicht 2. Voraussetzung dafür, daß Schicht 3 ihre Magnetisierungsrichtung behalten kann, ist, daß ihre Koerzitivenergie $E_{C3}$ größer als die Wandenergie $\sigma_{w2,3}$ plus ihrer Zeeman-Energie im äußeren Feld ist.

Für $T_a < T < T_m$ gilt:

$$E_{C3} > 2H_e M_{s3} t_3 + \sigma_{w2,3}$$

und es gilt:

$$E_{C1} + E_{C2} + \sigma_{w2,3} < 2H_e M_{s1} t_1 + 2H_e M_{s2} t_2$$

In diesem Temperaturbereich $T_a < T < T_m$ unterhalb der Lesetemperatur schirmen die Ausleseschicht und die Zwischenschicht mit ihrer Orientierung parallel zum äußeren Feld die Information der Speicherschicht ab und bewirken so eine Maskierung in dem in Leserichtung frontseitigen Bereich des Leseflecks.

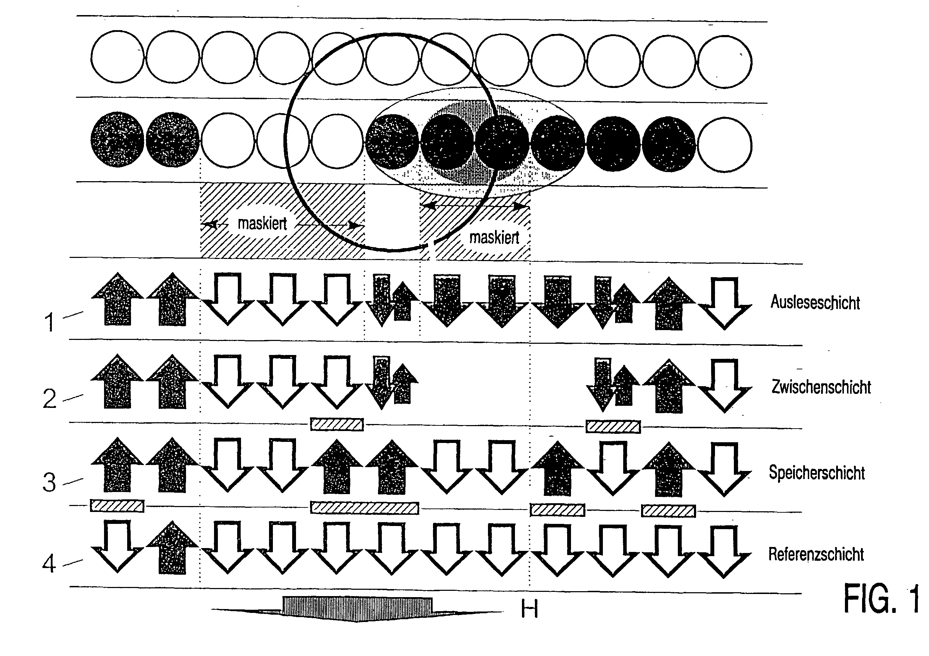

In der Nähe der Kompensationstemperaturen der Schichten 1 und 2 wächst ihre Koerzitivfeldstärke gegen unendlich und das äußere Feld kann die Orientierung der Nettomagnetisierung dieser Schichten nicht beeinflussen. Jedoch kann, wie in Fig. 1 gezeigt, durch Austauschkopplung mit der benachbarten Speicherschicht 3 Schicht 1 und 2 ummagnetisiert werden, wobei die dazu notwendige Energie aus der dabei frei werdenden Interfacewand verwendet wird. Ein alleiniges Ummagnetisieren der Schicht 2 unter Beibehaltung der Magnetisierungsrichtung der Schicht 1 mit dem damit verbundenen Aufbau einer Interfacewand zwischen Schicht1 und 2 würde mehr Energieaufwand bedeuten als ein gleichzeitiges Ummagnetisieren von Schicht1 und 2. Daher stellen sich die Nettomagnetisierungen der Schicht 1 und 2 antiparallel zum äußeren Feld ein.

Es gilt blei $T_m \leq T_{cp2}$:

$$E_{C1} + E_{C2} < \sigma_{w2,3} \text{ und } E_{C1} < \sigma_{w1,2}$$

Bei der Kompensationstemperatur von Schicht 1 und 2 sind somit die Magnetisierungen der RE- und TM-Komponente der Schichten 1, 2 und 3 parallel ausgerichtet. Die Ausleseschicht trägt daher im mittleren Temperaturbereich des Leseflecks, der sich von der Kompensationstemperatur $T_{cp2}$ der Schicht 2 bis zu deren Curie-Temperatur $T_{C2}$ erstreckt, die Information "log. 1".

Im heißen Bereich des Lasers wird die Curie-Temperatur der Schicht 2 überschritten, wobei sich der Magnetisierungszustand von Schicht 1 nicht ändert. RE- und TM-Komponente bleiben in ihrer Ausrichtung unverändert. Die Magnetisierung parallel zum äußeren Feld bildet dort die Rückmaskierung. Für den Bereich der Rückmaskierung im heißen Bereich des Leseflecks gilt:

Für $T_m < T < T_r$ gilt:

$$E_{C1} + \sigma_{w1,2} < 2H_e M_{s1} t_1$$

Für $T_{C2} < T < T_r$ gilt:

$$E_{C1} < 2H_e M_{s1} t_1$$

Im weiteren Verlauf wandert die Domäne aus dem heißen Bereich des Leseflecks heraus und kühlt wieder ab, wobei Schicht 2 parallel zum äußeren Feld ausgerichtet wird. Wenn beim weiteren Abkühlen der Kompensationspunkt der Schichten 1 und 2 außerhalb des Einflußbereiches des äußeren Magnetfeldes unterschritten wird, kehrt sich das Vorzeichen der Nettomagnetisierungen der Schichten 1 und 2 um. Dadurch ist unterhalb der Kompensationstemperatur von Schicht 1 und 2 wieder der Ausgangszustand erreicht, bei dem alle Schichten eine Orientierung antiparallel zum äußeren Feld besitzen.

Ausführungsbeispiel 2

Nach einer zweiten Ausführungsform umfaßt das erfindungsgemäße magneto-optische Speichermedium ein Substrat, vier übereinander angeordnete magnetische Schichten und eine oder mehrere weitere nicht-magnetische Schichten. Neben der Ausleseschicht, der Zwischenschicht und der Speicherschicht umfaßt das Speichermedium in dieser Ausführungsform zusätzlich eine Referenzschicht (reference layer) 4.
Ein magneto-optisches Speichermedium gemäß dieser Ausführungsform kann nach einem LIMDOW-Verfahren beschrieben werden. Das Schreiben nach dem LIMDOW-Verfahren ermöglicht das Schreiben in einem Durchgang im äußeren Feld eines Laufwerksmagneten ohne Umpolung des Magnetfeldes. Auch beim Schreiben wird das Temperaturprofil innerhalb des Brennflecks ausgenutzt, den ein Laserspot in einem Medium erzeugt. Die Laserleistung wird so eingestellt, daß nur im jeweils heißesten Bereich die gewünschten magnetischen Umwandlungen, die einem Schreibschritt entsprechen, einsetzen.

Für den Schreibvorgang nach dem LIMDOW-Verfahren wird zunächst bei der Raumtemperatur $T_a$ unter dem Einfluß des Magnetfeldes $H_e$ des Laufwerksmagneten die Nettomagnetisierung aller Schichten außer der Speicherschicht in Richtung von $H_e$ ausgerichtet, weil bei Raumtemperatur die Koerzitivfeldstärke aller Schichten außer die der Speicherschicht kleiner als das Magnetfeld $H_e$ des Laufwerksmagneten ist.

Für $T_a$ gilt:

$$H_{C1}, H_{C2}, H_{C4} < H_e < H_{C3}$$

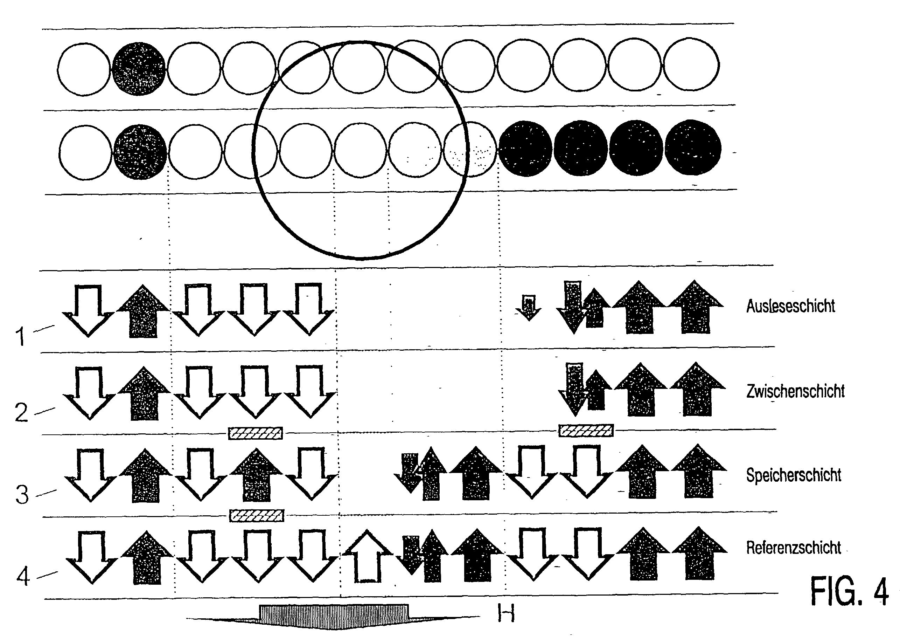

Zum Schreiben von " log. 0" erwärmt ein schwächerer Laserpuls Schicht 1 bis 3 über ihren Curie-Punkt und Schicht 4 über ihren Kompensationspunkt bis zur Temperatur $T_l$, siehe Fig. 4. Schicht 4 wird durch das äußere Feld nicht ummagnetisiert.

Für $T_l$ gilt:

$$2H_e M_{s4} t_4 < E_{C4}$$

Das Hochheizen über den Kompensationspunkt der Schicht 4 bedeutet daher, daß die Nettomagnetisierung von Schicht 4 nun antiparallel zum äußeren Feld steht. Beim Abkühlen wird zunächst die Curie-Temperatur der dritten Schicht erreicht. Dadurch wird Schicht 3 durch das äußere Feld $H_e$ in dessen Richtung ausgerichtet, was zu einer antiparallelen Stellung der RE- und der TM-Komponenten von Schicht 3 und 4 führt. Das bedeutet, daß sich zwischen den beiden Schichten eine horizontale Interfacewand mit der Wandenergie $\sigma_{w3,4}$ ausbildet. Voraussetzung dazu ist, daß bei dieser Temperatur gilt:

Bei $T_{C3}$ gilt:

$$\sigma_{w3,4} < 2H_e M_{s3} t_3$$

Beim weiteren Abkühlen werden im wesentlichen gleichzeitig die Kompensationstemperaturen von Schicht 3 und 4 erreicht, wobei sich durch den Abbau der horizontalen Interfacewand Schicht 3 parallel zu Schicht 4 ausrichtet, die unterhalb ihrer Kompensationstemperatur wieder parallel zum äußeren Feld ausgerichtet ist.

Bei $T_{cp3} \leq T_{cp4}$ gilt:

$$E_{C3} < \sigma_{w3,4} < E_{C4}$$

Beim weiteren Abkühlen wird die Curie-Temperatur der Schicht 1 unterschritten. Da ihre Koerzitivfeldstärke in der Nähe des Curie-Punktes klein ist, stellt sich die Nettomagnetisierung der Schicht 1 parallel zum äußeren Feld $H_e$ ein.

Bei $T_{C1}$ gilt:

$$H_{C1} < H_e$$

Wenn anschließend der Curie-Punkt der Schicht 2 unterschritten wird, stellt sich auch deren Nettomagnetisierung parallel zum äußeren Feld bzw. parallel zu Schicht 1 und 3 ein.

Da in diesem Temperaturbereich die Schichten 1 und 2 magnetisch vom TM-Anteil, die der Schichten 3 und 4 aber vom RE-Anteil dominiert sind, sind die magnetischen Momente der RE- und der TM-Komponente der Schicht 2 parallel zu denen der angrenzenden Schicht 1 und antiparallel zu denen von Schicht 3 ausgerichtet. Daher existiert eine horizontale Interfacewand mit einer entsprechenden Wandenergie zwischen Schicht 2 und 3.

Bei $T_{C2}$ gilt:

$$\sigma_{w2,3} < 2H_e M_{s2} t_2 + \sigma_{w1,2}$$

Beim weiteren Abkühlen werden die Kompensationstemperaturen von Schicht 1 und 2 unterschritten. Durch die Austauschkopplung mit Schicht 3 werden dabei Schicht 1 und 2 unter Auflösung der horizontalen Interfacewand zwischen Schicht 2 und 3 ummagnetisiert.

Bei $T_{cp1} \leq T_{cp2}$ gilt:

$$E_{C1} + E_{C2} < \sigma_{w2,3}$$

Beim weiteren Abkühlen auf Raumtemperatur verändert sich die Magnetisierung der Schichten nicht mehr. Das Schreiben mit einem schwächeren Laserpuls führt somit zu einem Magnetisierungszustand, bei dem alle Schichten parallel zum äußeren Feld ausgerichtet sind. Dies entspricht "log. 0".

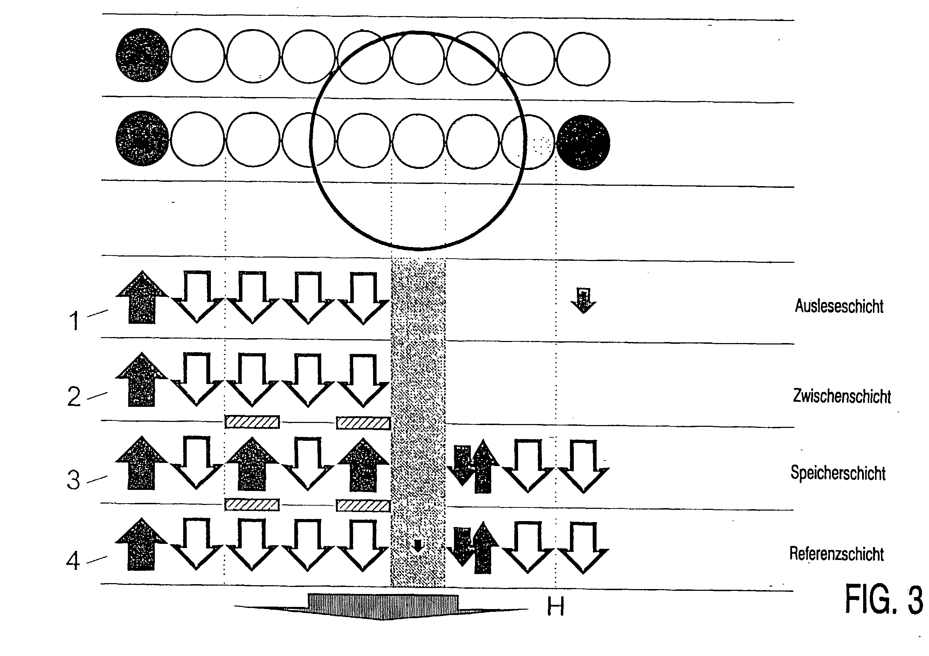

Zum Schreiben von "log. 1" werden mit einem starken Laserpuls alle Schichten über ihren Curie-Punkt hinaus auf $T_h$ erhitzt, siehe Fig. 3. Beim Abkühlen wird zuerst die Curie-Temperatur der vierten Schicht unterschritten. Die vierte Schicht übernimmt dann die Magnetisierungsrichtung des äußeren Feldes.

Bei Temperaturen knapp unterhalb von $T_{C4}$ gilt:

$$E_{C4} < 2H_e M_{s4} t_4$$

Anschließend wird die Curie-Temperatur der Schicht 3 unterschritten und die Schicht 3 übernimmt die Magnetisierungsrichtung parallel zum äußeren Feld. Zwischen Schicht 3 und 4 wird keine Interfacewand gebildet, da die magnetischen Momente von RE- und TM-Komponente parallel ausgerichtet sind.

Im Verlauf der weiteren Abkühlung erreichen Schicht 3 und 4 ihre Kompensationstemperaturen. Die Richtung ihrer Nettomagnetisierungen wechseln beim Unterschreiten der Kompensationstemperaturen in die Richtung, die antiparallel zum externen Feld ist, während die Richtung der Magnetisierung der beiden Komponenten unverändert bleibt. Da nahe des Kompensationspunktes die Koerzitivfeldstärke der Schichten hoch ist, kann das äußere Magnetfeld die Richtung der Magnetisierung der Schichten 3 und 4 dort nicht umdrehen.

Für $T \leq T_{cp3} \leq T_{cp4}$ gilt:

$$2H_e M_{s3} t_3 < E_{C3} + \sigma_{w3,4}$$

$$2H_e M_{s4} t_4 < E_{C4} + \sigma_{w3,4}$$

$$2H_e M_{s3} t_3 + 2H_e M_{s4} t_4 < E_{C3} + E_{C4}$$

Beim weiteren Abkühlen wird zunächst wieder der Curie-Punkt der Schicht 1 erreicht und die Nettomagnetisierung wächst in Richtung von $H_e$ auf, da die Koerzitivkraft nahe dem Curie-Punkt klein ist.

Es gilt bei $T_{C1}$:

$$H_{C1} < H_e$$

Anschließend wird der Curie-Punkt der Schicht 2 erreicht und auch diese bildet sich in Richtung des äußeren Feldes aus. Dabei wird keine horizontale Interfacewand zu der Schicht 3 aufgebaut, da die Magnetisierungen der RE- und der TM-Komponenten beider Schichten parallel ausgerichtet sind.

Beim weiteren Abkühlen der Schichten 1 und 2 werden deren Kompensationstemperatur unterschritten und ihre Nettomagnetisierungen wechseln die Richtung, so daß sie jetzt parallel zu den Schichten 3 und 4, aber antiparallel zum äußeren Feld steht.

Da ihre Koerzitivkraft in der Nähe des Kompensationspunktes gegen unendlich geht, kann das äußere Feld $H_e$ die Richtung der Nettomagnetisierungen dieser Schichten nicht umdrehen.

Für $T \leq T_{cp2} \leq T_{cp1}$ gilt:

$$2H_e M_{s1} t_1 < E_{C1} + \sigma_{w1,2}$$

$$2H_eM_{s2}t_2 < E_{C2} + \sigma_{w1,2} + \sigma_{w2,3}$$

$$2H_eM_{s1}t_1 + 2H_eM_{s2}t_2 < E_{C1} + E_{C2} + \sigma_{w2,3}$$

Letztendlich haben sich beim Schreiben mit einem starken Laserpuls alle Schichten antiparallel zum äußeren Feld ausgerichtet. Dies entspricht "log. 1".

Ein magneto-optisches Speichermedium gemäß der zweiten Ausführungsform der Erfindung kann ebenfalls nach einem MSR-Verfahren ausgelesen werden. Der Lesevorgang verläuft analog zu dem Lesevorgang der ersten Ausführungsform. Die zusätzliche Referenzschicht beeinflußt den Lesevorgang nicht. Da sie ähnlich wie die Speicherschicht 3 eine Kompensationstemperatur und eine Curie-Temperatur hat, die weit oberhalb der Lesetemperaturen liegen, verändern sich ihre magnetischen Eigenschaften während des Lesevorgangs nicht. Da die Referenzschicht eine niedrige Koerzitivfeldstärke bei Raumtemperatur hat, wird sie beim Eintritt in das äußere magnetische Feld parallel zu diesem ausgerichtet, und verbleibt während des gesamten Lesevorgangs in dieser Orientierung.

Für den Temperaturbereich $T_a < T < T_m$ gilt:

$$E_{C3} > 2H_eM_{s3}t_3 + \sigma_{w2,3} + \sigma_{w3,4}$$

und

$$E_{C1} + E_{C2} + \sigma_{w2,3} + E_{C4} + \sigma_{w3,4} < 2H_eM_{s1}t_1 + 2H_eM_{s2}t_2 + 2H_eM_{s4}t_4.$$

**Patentansprüche**

1. Magneto-optisches Speichermedium zum mehrfachen Schreiben von Informationen bei einer Schreibtemperatur $T_w$ oberhalb der Raumtemperatur $T_a$ und zum mehrfachen Lesen bei einer Temperatur $T_m$ mit einer Frontmaskierung bei der Temperatur $T_f$ und einer Rückmaskierung bei einer Temperatur $T_r$ oberhalb der Raumtemperatur $T_a$ in einem externen Magnetfeld $H_e$,
das ein Substrat,
eine auf dem Substrat angeordneten ersten magnetischen Schicht mit einer temperaturabhängigen Koerzitivfeldstärke $H_{C1}(T)$, der Kompensationstemperatur $T_{cp1}$ und der Curie-Temperatur $T_{C1}$,
eine auf der ersten magnetischen Schicht angeordneten zweiten magnetischen Schicht, einer temperaturabhängigen Koerzitivfeldstärke $H_{C2}(T)$, der Kompensationstemperatur $T_{cp2}$ und der Curie-Temperatur $T_{C2}$, und
eine auf der zweiten magnetischen Schicht angeordneten dritten magnetischen Schicht, mit einer temperaturabhängigen Koerzitivfeldstärke $H_{C3}(T)$, der Kompensationstemperatur $T_{cp3}$ und der Curie-Temperatur $T_{C3}$ umfasst,
wobei gilt:

$$T_a < T_f < T_m \leq T_{cp1} \leq T_{cp2} < T_{C2} < T_r < T_{C1} < T_{cp3} < T_{C3} \leq T_w$$

und

$$H_{C1}(T) < H_e \text{ für } T_a < T < T_m$$

$$H_{C2}(T) < H_e \text{ für } T_a < T < T_m$$

$$H_{C3}(T) > H_e \text{ für } T < T_w$$

2. Magneto-optisches Speichermedium zum mehrfachen Schreiben von Informationen bei zwei Schreibtemperaturen $T_h$, $T_l$ oberhalb der Raumtemperatur $T_a$ und zum mehrfachen Lesen bei einer Temperatur $T_m$ mit einer Frontmaskierung bei der Temperatur $T_f$ und einer Rückmaskierung bei einer Temperatur $T_r$ oberhalb der Raumtemperatur

$T_a$ in einem externen Magnetfeld $H_e$,

das ein Substrat,

eine auf dem Substrat angeordneten ersten magnetischen Schicht mit einer temperaturabhängigen Koerzitivfeldstärke $H_{C1}(T)$, der Kompensationstemperatur $T_{cp1}$ und der Curie-Temperatur $T_{C1}$,

eine auf der ersten magnetischen Schicht angeordneten zweiten magnetischen Schicht, einer temperaturabhängigen Koerzitivfeldstärke $H_{C2}(T)$, der Kompensationstemperatur $T_{cp2}$ und der Curie-Temperatur $T_{C2}$,

eine auf der zweiten magnetischen Schicht angeordneten dritten magnetischen Schicht, mit einer temperaturabhängigen Koerzitivfeldstärke $H_{C3}(T)$, der Kompensationstemperatur $T_{cp3}$ und der Curie-Temperatur $T_{C3}$ und

eine auf der dritten magnetischen Schicht angeordnete vierte magnetische Schicht, mit einer temperaturabhängigen Koerzitivfeldstärke $H_{C4}(T)$, der Kompensationsternperatur $T_{cp4}$ und der Curie-Temperatur $T_{C4}$ umfasst, wobei gilt:

$$T_a < T_f < T_m \leq T_{cp1} \leq T_{cp2} < T_{C2} < T_r < T_{C1} < T_{cp3} \leq T_{cp4} < T_{c3} < T_l < T_{C4} \leq T_h$$

und

$$H_{C1}(T) < H_e \text{ für } T_a < T < T_m$$

$$H_{C2}(T) < H_e \text{ für } T_a < T < T_m$$

$$H_{C3}(T) > H_e \text{ für } T < T_l, T_h$$

$$H_{C4}(T) < H_e \text{ für } T_a < T < T_m \text{ und für } T \leq T_h$$

**Claims**

1. A magneto-optical storage medium for the repeated writing of information at a write temperature $T_w$, above the room temperature $T_a$ and for the repeated reading out at a temperature $T_m$, with a front mask at the temperature $T_f$ and a rear mask at a temperature $T_r$, above the room temperature $T_a$, in an external magnetic field $H_e$, which medium includes a first magnetic layer which is disposed on the substrate and has a temperature-dependent coercivity $H_{C1}(T)$, the compensation temperature $T_{cp1}$ and the Curie temperature $T_{C1}$, a second magnetic layer which is disposed on the first magnetic layer and has a temperature-dependent coercivity $H_{C2}(T)$, the compensation temperature $T_{cp2}$ and the Curie temperature $T_{C2}$, and a third magnetic layer which is disposed on the second magnetic layer and has a temperature-dependent coercivity $H_{C3}(T)$, the compensation temperature $T_{cp3}$ and the Curie temperature $T_{C3}$, where:

$$T_a < T_f < T_m \leq T_{cp1} \leq T_{cp2} < T_{C2} < T_r < T_{C1} < T_{cp3} < T_{C3} \leq T_w$$

and

$$H_{C1}(T) < H_e \text{ for } T_a < T < T_m$$

$$H_{C2}(T) < H_e \text{ for } T_a < T < T_m$$

$$H_{C3}(T) >_{He} \text{ for } T < T_w$$

2. A magneto-optical storage medium for the repeated writing of information at two write temperatures $T_h$, $T_l$ above the room temperature $T_a$ and for the repeated reading out at a temperature $T_m$, with a front mask at the temperature

$T_f$ and a rear mask at a temperature $T_r$, above the room temperature $T_a$, in an external magnetic field $H_e$, which medium includes a substrate, a first magnetic layer which is disposed on the substrate and has a temperature-dependent coercivity $H_{C1}(T)$, the compensation temperature $T_{cp1}$ and the Curie temperature $T_{C1}$, a second magnetic layer which is disposed on the first magnetic layer, a temperature-dependent coercivity $H_{C2}(T)$, the compensation temperature $T_{cp2}$ and the Curie temperature $T_{C2}$, a third magnetic layer which is disposed on the second magnetic layer and has a temperature-dependent coercivity $H_{C3}(T)$, the compensation temperature $T_{cp3}$ and the Curie temperature $T_{C3}$, and a fourth magnetic layer which is disposed on the third magnetic layer and has a temperature-dependent coercivity $H_{C4}(T)$, the compensation temperature $T_{cp4}$ and the Curie temperature $T_{C4}$, where

$$T_a < T_f < T_m \leq T_{cp1} \leq T_{cp2} < T_{C2} < T_r < T_{C1} < T_{cp3} \leq T_{cp4} < T_{c3} < T_l < T_{C4} \leq T_h$$

and

$$H_{C1}(T) < H_e \text{ for } T_a < T < T_m$$

$$H_{C2}(T) < H_e \text{ for } T_a < T < T_m$$

$$H_{C3}(T) > He \text{ for } T < T_l, T_h$$

$$H_{C4}(T) < H_e \text{ for } T_a < T < T_m \text{ and for } T < T_h$$

**Revendications**

1. Support de mémoire magnéto-optique pour l'écriture multiple d'informations à une température d'écriture $T_w$ supérieure à la température ambiante $T_a$ et pour la lecture multiple à une température $T_m$ avec un masquage antérieur à la température $T_f$ et un masquage postérieur à une température $T_r$ supérieure à la température ambiante $T_a$ dans un champ magnétique externe $H_e$,
   qui comprend un substrat,
   une première couche magnétique disposée sur le substrat avec une intensité de champ coercitif $H_{C1}(T)$ dépendant de la température, la température de compensation $T_{cp1}$ et la température de Curie $T_{C1}$,
   une deuxième couche magnétique disposée sur la première couche magnétique, une intensité de champ coercitif $H_{C2}(T)$ dépendant de la température, la température de compensation $T_{cp2}$ et la température de Curie $T_{C2}$ et
   une troisième couche magnétique disposée sur la deuxième couche magnétique avec une intensité de champ coercitif $H_{C3}(T)$ dépendant de la température, la température de compensation $T_{cp3}$ et la température de Curie $T_{C3}$, dans lequel

$$T_a < T_f < T_m \leq T_{cp1} \leq T_{cp2} < T_{C2} < T_r < T_{C1} < T_{cp3} < T_{C3} \leq T_w$$

et

$$H_{C1}(T) < H_e \text{ pour } T_a < T < T_m$$

$$H_{C2}(T) < H_e \text{ pour } T_a < T < T_m$$

$$H_{C3}(T) > H_e \text{ pour } T < T_w$$

2. Support de mémoire magnéto-optique pour l'écriture multiple d'informations à deux températures d'écriture $T_h$, $T_l$ supérieures à la température ambiante $T_a$ et pour la lecture multiple à une température $T_m$ avec un masquage

antérieur à la température $T_f$ et un masquage postérieur à une température $T_r$ supérieure à la température ambiante $T_a$ dans un champ magnétique externe $H_e$,

qui comprend un substrat,

une première couche magnétique disposée sur le substrat avec une intensité de champ coercitif $H_{C1}(T)$ dépendant de la température, la température de compensation $T_{cp1}$ et la température de Curie $T_{C1}$,

une deuxième couche magnétique disposée sur la première couche magnétique, une intensité de champ coercitif $H_{C2}(T)$ dépendant de la température, la température de compensation $T_{cp2}$ et la température de Curie $T_{C2}$,

une troisième couche magnétique disposée sur la deuxième couche magnétique avec une intensité de champ coercitif $H_{C3}(T)$ dépendant de la température, la température de compensation $T_{cp3}$ et la température de Curie $T_{C3}$ et

une quatrième couche magnétique disposée sur la troisième couche magnétique avec une intensité de champ coercitif $H_{C4}(T)$ dépendant de la température, la température de compensation $T_{cp4}$ et la température de Curie $T_{C4}$, dans lequel

$$T_a < T_f < T_m \leq T_{cp1} \leq T_{cp2} < T_{C2} < T_r < T_{C1} < T_{cp3} \leq T_{cp4} < T_{C3} < T_l < T_{c4} \leq T_h$$

et

$$H_{C1}(T) < H_e \text{ pour } T_a < T < T_m$$

$$H_{C2}(T) < H_e \text{ pour } T_a < T < T_m$$

$$H_{C3}(T) > H_e \text{ pour } T < T_l, T_h$$

$$H_{C4}(T) > H_e \text{ pour } T_a < T < T_m \text{ et pour } T \leq T_h$$

maskiert

maskiert

1 — Ausleseschicht

2 — Zwischenschicht

3 — Speicherschicht

4 — Referenzschicht

H

FIG. 1

EP 0 974 962 B1

FIG. 2

maskiert

maskiert

1 — Ausleseschicht

2 — Zwischenschicht

3 — Speicherschicht

4 — Referenzschicht

H

EP 0 974 962 B1

FIG. 3

Ausleseschicht

Zwischenschicht

Speicherschicht

Referenzschicht

FIG. 4